# EUROPÄISCHE PATENTSCHRIFT

(11) **EP 2 325 527 B1**
(45) Veröffentlichungstag und Bekanntmachung des Hinweises auf die Patenterteilung: **12.09.2012**
(21) Anmeldenummer: 09013572.4
(22) Anmeldetag: 28.10.2009
(51) Int. Cl.: F16H 57/08, B21D 28/16

(54) **Verfahren und Vorrichtung zum Herstellen von zueinander fluchtenden Bohrungen in einer Planetenradträgereinheit**
Method and device for producing bore holes in a planet wheel holder unit which are aligned to each other
Procédé et dispositif de fabrication de trous de forage alignés les uns par rapport aux autres dans une unité de support satellite

(43) Veröffentlichungstag der Anmeldung: 25.05.2011
(73) Patentinhaber: Feintool Intellectual Property AG, 3250 Lyss (CH)
(72) Erfinder: Grimm, Willi, Dipl.-Ing., 3283 Kallnach (CH)
(74) Vertreter: Hannig, Wolf-Dieter

(56) Entgegenhaltungen:
- DE-A1- 3 637 299
- DE-A1- 10 334 459
- DE-A1-102004 057 576

## Beschreibung

Die Erfindung betrifft ein Verfahren zum Herstellen von zueinander fluchtenden Bohrungen in einer Planetenradträgereinheit zur positionsgenauen Aufnahme von Planetenradachsen für Getriebe, bei dem parallel zueinander und im Abstand voneinander angeordnete, beispielsweise durch Stauchnieten, Verschweißen, Verstemmen verbundene obere und untere Wangen zu einer Planetenradträgereinheit zusammengefügt.

Die Erfindung betrifft ferner eine Vorrichtung zum Herstellen von zueinander fluchtenden Bohrungen in einer Planetenradträgereinheit zur positionsgenauen Aufnahme von Planetenradachsen für Getriebe, die aus parallel zueinander und im Abstand voneinander angeordnete, beispielsweise durch Stauchnieten, Verschweißen, Verstemmen verbundene obere und untere Wangen zusammengesetzt sind, mit einem aus mehreren Werkzeugteilen zusammengesetzten Werkzeug umfassenden Werkzeug. Eine entsprechende Vorrichtung bzw. ein entsprechendes Vefahren sind aus Dokument, DE 10 2004 057 576 A1 bekannt.

### Stand der Technik

Mehrteilige, beispielsweise aus Führungsscheibe und Stegstern, zusammengesetzte Planetenradträger gehören seit langem zum bekannten Stand der Technik (siehe u.a.DE 1 193 377 A, DE 25 03 518 A1). Derartige Planetenradträger bilden aus den Einzelteilen eine Einheit, die gebohrt bzw. fertigbearbeitet und dann mit den Planetenradachsen versehen wird, wobei die Planetenradachsen in miteinander fluchtenden Bohrungen der Planetenradträgereinheit gelagert sind. Diese Bohrungen müssen eine außerordentliche Genauigkeit in Bezug auf Achsneigung, Achsschränkung, Durchmessertoleranz und gleichmäßigem Sehnenmaß besitzen. Von Nachteil ist, dass die Bohrkanten einem spanenden Entgraten unterworfen werden müssen, um den hohen Qualitätsanforderungen zu genügen. Besonders schwierig ist das Entgraten der inneren Bohrkanten der Planetenradträgereinheit, das einen extrem hohen Aufwand nach sich zieht.
All dies führt letztendlich zu einem sehr hohen Zeitaufwand in der Herstellung, was sich in hohen Herstellungskosten niederschlägt.

Ein weiterer ganz wesentlicher Nachteil besteht darin, dass durch die gespindelte, also spanende Bearbeitung der Bohroberfläche und das spanende Entgraten der Bohrkanten der Bohrungen eine Tragteilreduzierung je Planetenradträgerwange verursacht, was zu einer entsprechenden Erhöhung der Wandstärken von Führungsscheibe und Stegstern führt, um die entsprechenden Drehmomente übertragen zu können.

DE 10 2004 057 576 A1 entsprechend dem gattungsbildendem Dokument werden die Bohrungen beim Feinstanzen der Führungsscheiben mit gestanzt.

### Aufgabenstellung

Bei diesem Stand der Technik liegt der Erfindung die Aufgabe zugrunde, ein Verfahren und eine Vorrichtung zum Herstellen von zueinander fluchtenden Bohrungen in einer Planetenradträgereinheit zu entwickeln, die in der Lage sind, die spanende Bearbeitung des Vor- und Fertigspindeln der Bohrungen durch ein Feinschneidvorgang mit integriertem Verprägen des Grates bei gleicher oder besserer Qualität kostengünstig abzulösen, wobei durch das Feinschneiden eine Kaltverfestigung der Bohroberfläche und durch das Gratverprägen eine Tragteilerhöhung je Planetenradträgerwange mit gleichzeitiger Verringerung der Wandstärken der Wangen und somit einer Gewichtsreduzierung der Getriebe sowie geringerem Platzbedarf für die Getriebe erreicht werden soll.

Diese Aufgabe wird durch ein Verfahren der eingangs genannten Gattung mit den Merkmalen des Anspruchs 1 und durch eine Vorrichtung mit den Merkmalen des Anspruchs 8 gelöst.

Vorteilhafte Ausgestaltungen des Verfahrens und der Vorrichtung sind den Unteransprüchen entnehmbar.

Die erfindungsgemäße Lösung zeichnet sich dadurch aus, dass das Feinschneiden auch für das positionsgenaue Herstellen von zueinander vertikal fluchten Bohrungen, beispielsweise Bohrungen in voneinander beabstandeten Wangen von Planetenradträgereinheiten, anwendbar wird.
Sie basiert auf der Erkenntnis, dass die Bohrungen in allen Wangen durch ein simultanes positionsgenaues Feinschneiden in einer ersten Stufe in einem Feinschneidwerkzeug erzeugt und anschließend die feingeschnittenen Bohrungen in einer zweiten Stufe in einem Umformwerkzeug durch ein simultanes inneres und äußeres Gratverprägen an jeder Bohrkante der Bohrungen ohne ein Nacharbeiten fertigbearbeitet wird.
Natürlich kann die erfindungsgemäße Lösung auch überall dort zum Einsatz gebracht werden, wo Achsen oder Wellen in fluchtenden Bohrungen zwischen dünnen ebenen Wandbereichen eines Bauteils aufgenommen werden sollen.

Das erfindungsgemäße Verfahren läuft in der ersten Stufe und zweiten Stufe in folgenden Arbeitsschritten ab:
a) hydraulisches festes Einspannen der Wangen der Planetenradträgereinheit mit einer in den Raum zwischen den Wangen einfahrbaren, in exakter Position verriegelbaren Matrize und jeweils einer den Wangen zugeordneten oberen bzw. unteren Pressplatte beim Schließen des Werkzeugs,
b) gleichzeitiges Ausschneiden der Bohrungen in den Wangen durch jeweils mindestens zwei auf einer Achse liegenden, zueinander gegenläufig arbeitenden Feinschneidstempel in der ersten Stufe derart, dass beide Bohrungen exakt zueinander passgenau auf einer gemeinsamen Achse fluchten,
c) Entriegeln und Zurückfahren der Matrize unter Mitnahme der Abfallbutzen zur erneuten Freigabe des Raumes zwischen den Wangen,
d) Einfahren von inneren Prägestempeln in den Raum zwischen den Wangen und gleichzeitiges Verriegeln der Prägestempel im Block auf der gemeinsamen Achse der Bohrungen in den Wangen in einem definierten Abstandsmaß,
e) Gratverprägen aller Bohrkanten der feingeschnittenen Bohrungen in den Wangen durch auf die gemeinsame Achse der Bohrungen ausgerichtete, zueinander gegenläufig arbeitende, im Block auf den Block der verriegelten inneren Prägestempel auflaufende äußere Prägestempel mit einem definierten Prägeradius beim Schließen des Werkzeugs,
f) Abführen der beim Feinschneiden anfallenden Butzen beim Öffnen des Werkzeugs entweder senkrecht zur Transportrichtung der Matrize nach unten oder oben sowie Entnahme der fertig bearbeiteten Planetenradträgereinheit.

Von Vorteil ist weiterhin, dass die Arbeitsschritte a) bis f) in einem Folgeverbundwerkzeug innerhalb eines Arbeitshubes durchgeführt werden können, wodurch sich die Investitionskosten gegenüber dem Stand der Technik erheblich reduzieren.
Ebenso ist es aber auch möglich, die Arbeitsschritte a) bis c) und die Arbeitsschritte d) bis f) in separaten Werkzeugen, beispielsweise einem Feinschneidwerkzeug und einem Umformwerkzeug durchzuführen.
Bei beiden Varianten ergibt sich ein sehr stabiler Fertigungsprozess, weil alle gefertigten Maße werkzeugkonform gebunden sind und daher eine Wiederholgenauigkeit aufweisen, die es erlaubt, die Prüfzyklen zur Qualitätssicherung wesentlich zu verlängern.

Der besondere Vorteil des erfindungsgemäßen Verfahrens ist darin zu sehen, dass mit dem Feinschneiden der Bohrungen eine Kaltverfestigung der Bohrungsoberfläche von bis zu 100% und mit dem Gratverprägen eine Traganteilerhöhung je Planetenradträgerwange von bis zu 13% gegenüber einer spanenden Bearbeitung erreicht wird.
In Folge führt dies dazu, dass die Planetenradträgereinheit ein höheres Drehmoment übertragen kann bzw. die Wandstärken der Planetenradträgerwangen reduziert werden können, was wiederum Materialeinsparungen, eine Gewichtsreduzierung und eine kompaktere Bauweise des Getriebes ermöglicht.

Nach einer bevorzugten Ausführungsform des erfindungsgemäßen Verfahrens werden zum Gratverprägen Prägestempel verwendet, die einen definierten Prägeradius von bis zu 0,5 mm besitzen. Dies stellt sicher, dass der an die Bohrkanten der Bohrungen angeprägte Radius im Vergleich zum spanenden Entgraten sehr konstant ist und der Grat spanlos umgeformt werden kann.

Die erfindungsgemäße Vorrichtung ist einfach und kompakt aufgebaut und hat den großen Vorteil, dass innerhalb eines Arbeitshubes das Feinschneiden in einer ersten Stufe und das Gratverprägen in einer zweiten Stufe durchführbar sind. Mit anderen Worten, zu der ersten Bearbeitungsstufe gehören
a) eine den Wangen zugeordnete gemeinsame Matrize, die als ein präzisionsgeführter Schieber in den Raum zwischen den Wangen positionsgenau einfahr- und rücklaufbar ausgebildet ist,
b) je eine obere und untere Pressplatte mit Ringzacke zum Festspannen der Wangen an der Matrize und
c) je einen zum Ausschneiden der Bohrung vorgesehenen Feinschneidstempel, von denen jeweils einer der oberen oder unteren Wange zugeordnet ist und die Feinschneidstempel auf einer gemeinsamen Achse angeordnet sind, wobei die Feinschneidstempel eine exakt die Achse der Planetenräder abbildende, gegeneinander ausgerichtete Schnittrichtung aufweisen.
Die zweite Bearbeitungsstufe umfasst innere Prägestempel, die in dem Raum zwischen den Wangen einführbar und aus diesem rückführbar, in Bezug auf die Schnittrichtung der Feinschneidstempel im Block ver- und entriegelbar ausgebildet sind, wobei den inneren Prägestempeln äußere Prägestempel für jede Wange zugeordnet sind, deren Achsen auf die Schnittrichtung der Feinschneidstempel ausgerichtet sind und die im Block gegen die Bohrkanten zum Gratverprägen anlaufen.

Die Matrize ist horizontal verfahrbar ausgebildet und besitzt eine Öffnung zur Aufnahme der beim Schneiden der Bohrungen anfallenden Butzen. Beim Rücklauf der Matrize aus ihrer Position zwischen den Wangen der Planetenradträgereinheit nimmt die Matrize die Butzen mit und befördert diese aus dem Werkzeug, sobald dieses öffnet.

Weitere Vorteile und Einzelheiten ergeben sich aus der nachfolgenden Beschreibung unter Bezugnahme auf die beigefügten Zeichnungen.

### Ausführungsbeispiel

Die Erfindung soll nachstehend an einem Ausführungsbeispiel näher erläutert werden.

Es zeigen

Fig. 1 eine Planetenradträgereinheit in der Draufsicht nach dem Stand der Technik,

Fig. 2 einen Schnitt der Planetenradträgereinheit gemäß dem Stand der Technik entlang der Linie A-A der Fig. 1,

Fig. 3 eine Darstellung der Herstellung von zueinander achsgenau ausgerichteten Bohrungen in Planetenradträgereinheiten nach dem Stand der Technik,

Fig. 4a und 4b eine schematische Darstellung des erfindungsgemäßen Verfahrens an Hand der Bearbeitungsstufe "Feinstanzen" und der Bearbeitungsstufe "Gratverprägen".

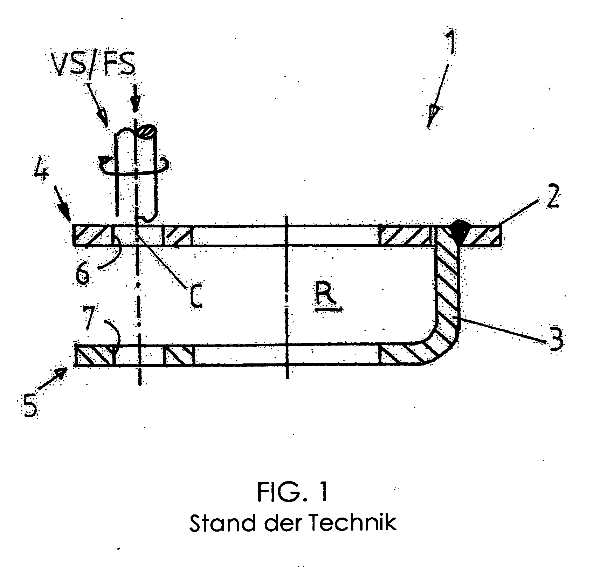

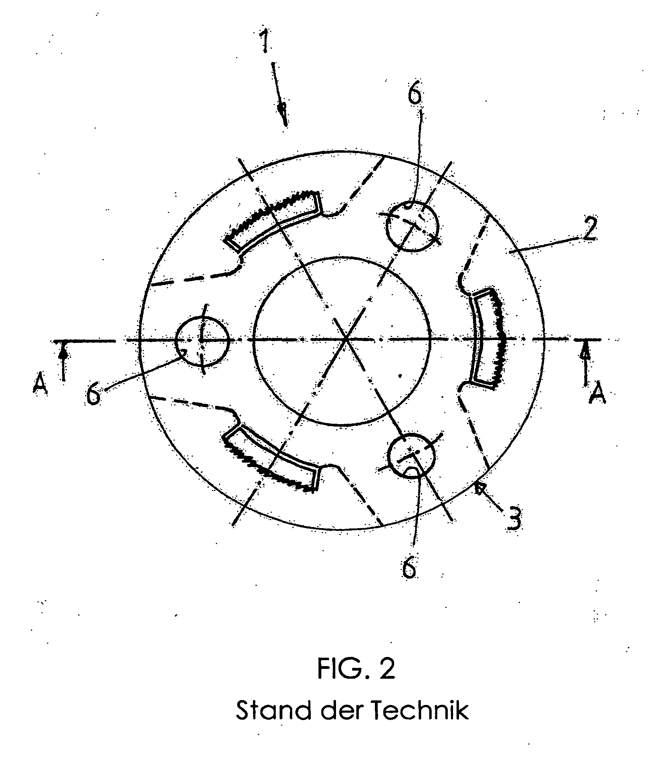

Die Fig. 1 und 2 zeigen ein Beispiel einer Planetenradträgereinheit 1 in der Draufsicht und in Schnittdarstellung. Die Planetenradträgereinheit 1 setzt sich aus einer Führungsscheibe 2 und einem Stegstern 3 zusammen. Führungsscheibe 2 und Stegstern 3 bilden die Wangen 4 und 5 der Planetenradträgereinheit 1 und sind in diesem Beispiel durch Verschweißen fest verbunden. Andere Verbindungsarten wie Vernieten oder Verstemmen bzw. kombinierte Arten sind ebenfalls möglich. In die Wangen 4 bzw. 5 der Planetenradträgereinheit 3 werden miteinander fluchtende positionsgenaue Bohrungen 6 und 7 durch Vor- und Fertigspindeln VS/FS eingebracht. Die Bohrungen 6 und 7 dienen zur Lagerung nicht dargestellter Planetenräderachsen und müssen sehr hohe Toleranzvorgaben in der Achsneigung, Achsschränkung, dem Durchmesser und dem Sehnenmaß erfüllen. Die Anzahl der Bohrungen 6 und 7 in den Wangen 4 bzw. 5 der Planetenradträgereinheit 1 richtet sich nach der Größe des Zu übertragenden Drehmomentes. Im vorliegenden Beispiel sind drei Bohrungen dargestellt. In der Praxis können durchaus 4 bzw. 5 oder auch mehr Bohrungen zur Anwendung kommen. Der beim Spindeln der Bohrungen entstehende Grat an den Bohrkanten wird anschließend durch ein spanendes Entgraten mittels Roboter entfernt.

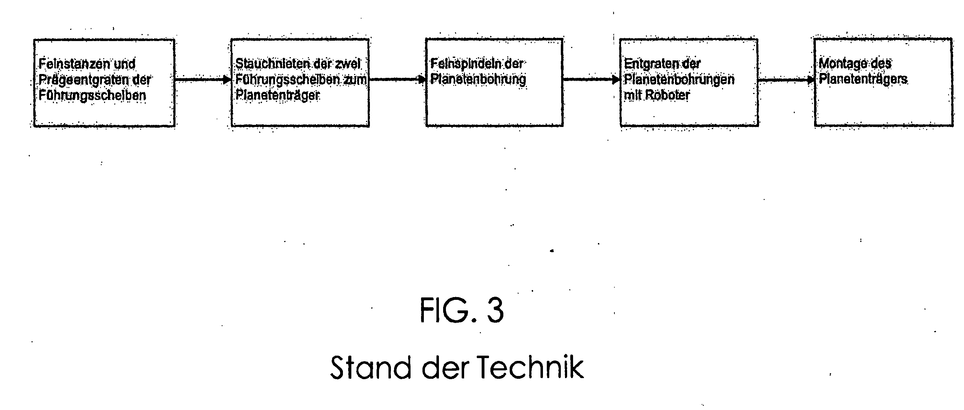

Die Fig. 3 verdeutlicht den im Abschnitt [0020] dargestellten Arbeitsablauf nach dem Stand der Technik.

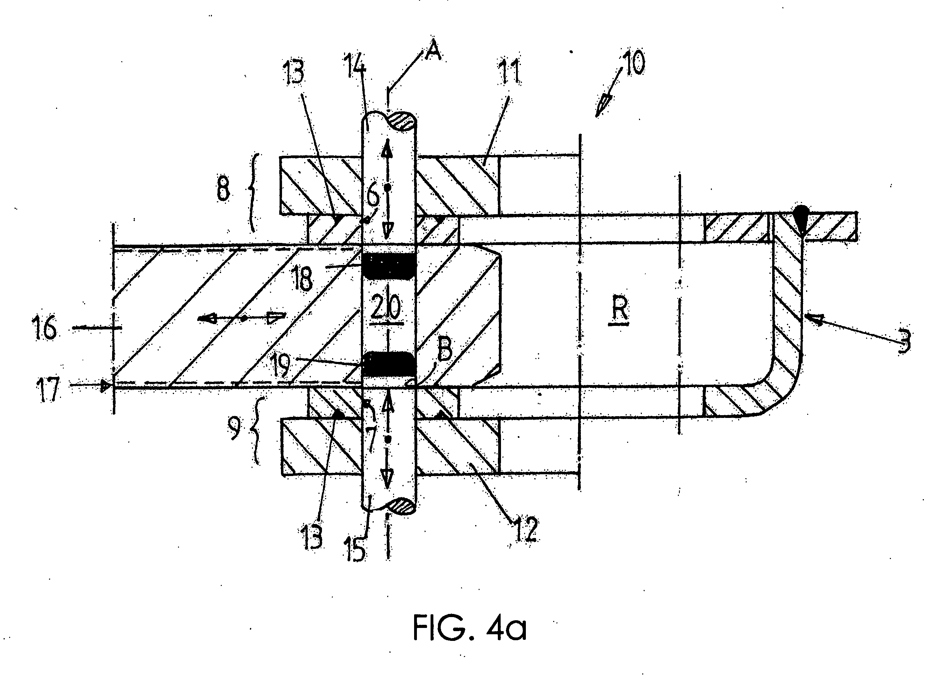

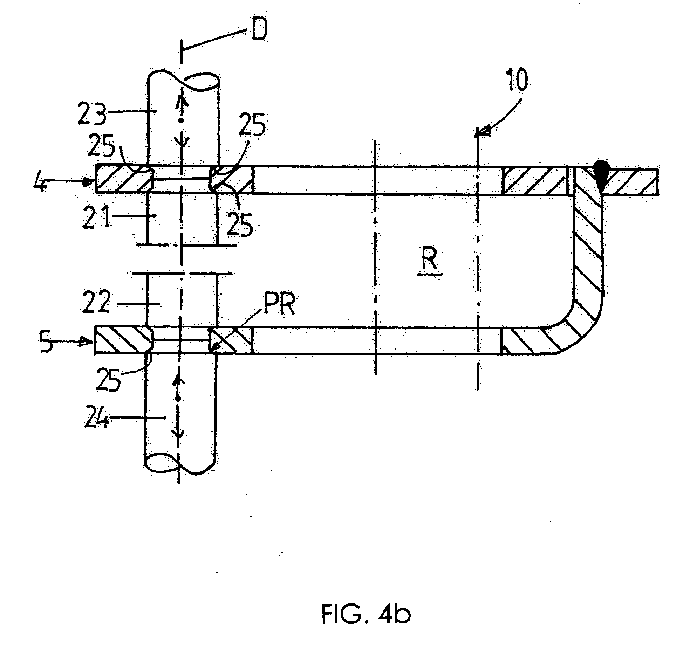

Die Fig. 4a und 4b zeigen den prinzipiellen Ablauf und den Aufbau der ersten und zweiten Bearbeitungsstufe des erfindungsgemäßen Verfahrens.
Die in Fig. 1 verwendeten Bezugszeichen für die Planetenradträgereinheit 1 werden in der weiteren Beschreibung beibehalten.
Die erfindungsgemäße Vorrichtung, in der das erfindungsgemäße Verfahren abläuft, setzt sich im vorliegenden Beispiel aus Werkzeugteilen 8 und 9 eines Folgeverbundwerkzeugs 10 zusammen, das in der ersten Bearbeitungsstufe ein Feinschneidwerkzeug und in der zweiten Bearbeitungsstufe ein Gratverprägewerkzeug umfasst.
Jedes Werkzeugteil 8 bzw. 9 der ersten Bearbeitungsstufe besitzt je eine Pressplatte 11 bzw. 12 mit zur den jeweiligen Wangen 4 bzw. 5 hin ausgerichteten Ringzacken 13, die sich beim hydraulisch festen Verspannen der Wangen 4 bzw. 5 vor dem Schneiden in den Werkstoff der Wangen eindrücken und ein Nachfließen des Werkstoffs beim Schneiden verhindern. Zu jedem Werkzeugteil 8 bzw. 9 gehört des Weiteren je ein Feinschneidstempel 14 bzw. 15, die auf einer gemeinsamen Stempelachse A liegen und jeweils senkrecht zu den Wangen 4 bzw. 5 übereinander angeordnet sind. Die Feinschneidstempel 14 bzw. 15 führen zueinander gegenläufige Schneidbewegungen bzw. Arbeitshubbewegungen aus, die durch Pfeile angedeutet sind.
Den Werkzeugteilen 8 bzw. 9 ist eine gemeinsame Matrize 16 zugeordnet, die horizontal in den Raum R zwischen den Wangen 4 bzw. 5 einfahrbar und herausfahrbar ausgebildet ist.
Die Matrize 16 ist auf einem präzisionsgeführten Schieber 17 angeordnet, der in Bezug auf die Stempelachse A und die Schneidöffnung B in der Matrize 16 positionsgenau verriegel- und entriegelbar ist.
Dies gewährleistet, dass die Achse C (s.a. Fig. 1) der in die Wangen 4 bzw. 5 feingeschnittenen Bohrungen 6 und 7 genau mit der Stempelachse A übereinstimmen.
In der Fig. 4a ist die gemäß Fig. 1 beschriebene Planetenradträgereinheit 3 im hydraulisch fest eingespannten Zustand dargestellt. Die Feinschneidstempel 14 bzw. 15 haben entsprechend ihrer geometrischen Auslegung je eine Bohrung 6 in die Wange 4 und eine Bohrung 7 in die Wange 5 geschnitten. Der jeweilige Abfallbutzen 18 und 19 wird beim Schneiden in einen Schacht 20 der Matrize 16 gedrückt.
Nach dem Entriegeln des Schiebers 17 läuft die Matrize 16 mit dem Schieber 17 horizontal aus den Raum R zwischen den Wangen 4 und 5 bis zu einer Position, in der ein zu den Werkzeugteilen 8, 9 gehörender, nicht dargestellter Ausstosser die Abfallbutzen 18 und 19 senkrecht nach unten zur Horizontalbewegung der Matrize aus der erfindungsgemäßen Vorrichtung befördert. Natürlich gehört es auch zu der Erfindung, wenn die Ausstoßbewegung senkrecht nach oben zur Horizontalbewegung mittels eines zum Werkzeug gehörenden Auswerfers und eines Querschiebers durchgeführt wird.

Die Fig. 4b zeigt den Zustand der mit Bohrungen 6 und 7 versehenen Planetenradträgereinheit 1, nachdem die Matrize 16 aus dem Raum zwischen den Wangen 4 und 5 in die Ausstoßposition zurückgelaufen ist. Zur Bearbeitungsstufe "Gratverprägen" gehören pro feingeschnittener Bohrung innere und äußere Prägestempel 21 und 22 bzw. 23 und 24, deren Achsen auf einer gemeinsamen Achse D liegen und deren Wirkrichtung zueinander gegenläufig sind.
Die Prägestempel 21 bis 24 befinden sich auf einem nicht dargestellten Radialschieber mit mechanischer Ver- und Entriegelung, so dass die Prägestempel 21 bis 24 in Bezug auf die Bohrkanten 25 jeder Bohrung 6 und 7 positionsgenau in ihrer Lage zu den Bohrkanten eingerichtet werden können. Alle Prägestempel 21 bis 24 besitzen zum Prägen einen definierten Prägeradius PR von beispielsweise bis zu 0,5 mm.
Das Gratverprägen läuft dann wie folgt ab. Die inneren Prägestempel 21 und 22 werden durch den Radialschieber in den Raum R zwischen den Wangen 4 und 5 eingefahren und im Block, dass heißt gemeinsam und gleichzeitig positionsgenau im Abstandsmaß verriegelt. Beim weiteren Schließen der erfindungsgemäßen Vorrichtung laufen die äußeren Prägestempel 23 und 24 im Block gleichzeitig gegen den verriegelten Block der inneren Prägestempel 21 und 22 auf und prägen gleichzeitig alle vier Bohrkanten 25 der Bohrungen 6 und 7 mit dem definierten Prägeradius PR an, so das der vom Feinschneiden erzeugte Grat an den Bohrkanten 25 verprägt wird.
Beim Öffnen des Werkzeugs der erfindungsgemäßen Vorrichtung kehren sich alle Bewegungen um, d.h. die Prägestempel 21 bis 24 werden im Block entriegelt und mit dem Radialschieber aus dem Raum R zwischen den Wangen 4 und 5 heraus bewegt und in ihre Ausgangslage verfahren.
Die mit den feingeschnittenen und gratverprägten Bohrungen 6 und 7 versehene Planetenradträgereinheit 1 kann entnommen und eine unbearbeitete Planetenradträgereinheit 1 der ersten Bearbeitungsstufe wieder zugeführt werden, so dass das erfindungsgemäße Verfahren erneut ablaufen kann.

Mit der Erfindung lassen sich folgende Vorteile erreichen. Mit dem Feinschneiden der Planetenradachsbohrungen 6 und 7 in der ersten Bearbeitungsstufe wird eine Kaltverfestigung der Oberfläche der Bohrungen 6 und 7 von etwa bis 100% gegenüber einer spanenden Herstellung der Bohrungen erreicht. Das Gratverprägen in der zweiten Bearbeitungsstufe ermöglicht es, eine Traganteilerhöhung von etwa 13% pro Planetenradträgerwange zu erzielen, weil der angeprägte Radius an den Bohrkanten 25 der feingeschnittenen Bohrungen sehr präzise eingehalten werden kann. Diese Verbesserungen führen dazu, dass die Planetenradträgereinheit 3 in der Lage ist, ein höheres Drehmoment bei ansonsten identischer Abmessung aufzunehmen. Mit anderen Worten, die Wandstärken der Wangen können bei Neuauslegung reduziert werden, so dass erhebliche Materialeinsparungen entstehen und das Gewicht und die Größe der Getriebe reduziert werden können.
Das erfindungsgemäße Verfahren führt zu einer sehr stabilen Fertigung mit einer hohen Reproduzierbarkeit, da alle Maße werkzeugformgebunden sind. Die Kosten für die Qualitätssicherung sinken und der Prüfzyklus kann entsprechend verlängert werden.

### Bezugszeichenliste

- Planetenradträgereinheit: 1
- Führungsscheibe: 2
- Stegstern: 3
- Wangen von 1: 4, 5
- Bohrungen in 4 und 5: 6, 7
- Werkzeugteil: 8, 9
- Folgeverbundwerkzeug: 10
- Pressplatte: 11,12
- Ringzacken in 11, 12: 13
- Feinschneidstempel: 14,15
- Matrize: 16
- Schieber für 16: 17
- Abfallbutzen: 18,19
- Fallschacht in 16: 20
- Innere Prägestempel: 21,22
- Äußere Prägestempel: 23,24
- Bohrkanten von 6, 7: 25
- Stempelachse von 14,15: A
- Schneidöffnung in 16: B
- Achsen von 6, 7: C
- Stempelachse von 21 bis 24: D
- Prägeradius: PR
- Raum zwischen 4, 5: R
- Vor- und Fertigspindeln: VS/FS

## Patentansprüche

1. Verfahren zum Herstellen von zueinander fluchtenden Bohrungen in einer Planetenradträgereinheit zur positionsgenauen Aufnahme von Planetenradachsen für Getriebe, bei dem parallel zueinander und im Abstand voneinander angeordnete, beispielsweise durch Stauchnieten, Verschweißen, Verstemmen, verbundene obere und untere Wangen (4,5) zu einer Planetenradträgereinheit (1) zusammengefügt
**dadurch gekennzeichnet, dass** anschließend die Bohrungen (6,7) für die Planetenräder in die Wangen (4,5) der Planetenradträgereinheit (1) auf einer gemeinsam fluchtenden Achse (C) eingebracht werden, und dass die Bohrungen (6,7) in allen Wangen (4,5) durch ein simultanes positionsgenaues Feinschneiden in einer ersten Stufe in einem Feinschneidwerkzeug erzeugt und anschließend die feingeschnittenen Bohrungen in einer zweiten Stufe in einem Umformwerkzeug durch ein simultanes inneres und äußeres Gratverprägen an jeder Bohrkante der Bohrungen (6,7) ohne ein Nacharbeiten fertigbearbeitet wird.

2. Verfahren nach Anspruch 1, **dadurch gekennzeichnet, dass** in der ersten Stufe und zweiten Stufe folgende Arbeitsschritte ablaufen:
a) hydraulisches festes Einspannen der Wangen (4,5) der Planetenradträgereinheit (1) mit einer in den Raum zwischen den Wangen (4,5) einfahrbaren, in exakter Position verriegelbaren Matrize (16) und jeweils einer den Wangen (4,5) zugeordneten oberen bzw. unteren Pressplatte (11,12) beim Schließen des Werkzeugs;
b) gleichzeitiges Ausschneiden der Bohrungen (6,7) in den Wangen (4,5) durch jeweils mindestens zwei auf einer Achse liegende, zueinander gegenläufig arbeitende Feinstanzstempel (14,15) in der ersten Stufe derart, dass beide Bohrungen (4,5) exakt zueinander passgenau auf einer gemeinsamen Achse (C) fluchten,
c) Entriegeln und Zurückfahren der Matrize (16) unter Mitnahme des Abfallbutzens (18,19) zur Freigabe des Raumes zwischen den Wangen (4,5),
d) Einfahren von inneren Prägestempeln (21,22) in den Raum zwischen den Wangen (4,5) und gleichzeitiges Verriegeln der Prägestempel (21,22,23,24) im Block auf der gemeinsamen Achse (C) der Bohrungen (4,5) in den Wangen (6,7) in einem definierten Abstandsmaß,
e) Gratverprägen aller Bohrkanten der feingeschnittenen Bohrungen (6,7) in den Wangen (4,5) durch auf die gemeinsame Achse (C) der Bohrungen (6,7) ausgerichtete, zueinander gegenläufig arbeitende, gleichzeitig und gemeinsam auf den Block der verriegelten inneren Prägestempel (21,22) auflaufende äußere Prägestempel (23,24) mit einem definierten Prägeradius beim Schließen des Werkzeugs,
f) Abführen der beim Feinschneiden anfallenden Butzen (18,19) beim Öffnen des Werkzeugs entweder senkrecht zur Transportrichtung der Matrize (16) nach unten oder oben sowie Entnahme der fertig bearbeiteten Planetenradträgereinheit (1).

3. Verfahren nach Anspruch 1 und 2, **dadurch gekennzeichnet, dass** die Arbeitsschritte a) bis f) in einem Folgeverbundwerkzeug innerhalb eines Arbeitshubes durchgeführt werden.

4. Verfahren nach Anspruch 1 und 2, **dadurch gekennzeichnet, dass** die Arbeitsschritte a) bis c) und die Arbeitsschritte d) bis f) in separaten Werkzeugen durchgeführt werden.

5. Verfahren nach Anspruch 1, **dadurch gekennzeichnet, dass** durch das Feinschneiden der Bohrungen (6,7) eine Kaltverfestigung der Bohrungsoberfläche von bis zu 50% gegenüber einer spanenden Bearbeitung erzeugt wird.

6. Verfahren nach Anspruch 1, **dadurch gekennzeichnet, dass** durch das Gratverprägen eine Traganteilerhöhung je Führungsscheibe von bis zu 13% gegenüber einer spanenden Entgratung erreicht wird.

7. Verfahren nach Anspruch 1 und 2, **dadurch gekennzeichnet, dass** zum Gratverprägen Prägestempel (21,22,23,24) mit einem definierten Prägeradius von bis zu 0,2 mm verwendet werden.

8. Vorrichtung zum Herstellen von zueinander fluchtenden Bohrungen in einer Planetenradträgereinheit zur positionsgenauen Aufnahme von Planetenradachsen für Getriebe, die aus parallel zueinander und im Abstand voneinander angeordnete beispielsweise durch Stauchnieten, Verschweißen, Verstemmen verbundene obere und untere Wangen (4,5) zusammengesetzt ist, mit einem aus mehreren Werkzeugteilen (8, 9) zusammengesetzten Werkzeug, **dadurch gekennzeichnet, dass** in einer ersten Bearbeitungsstufe die Werkzeugteile (8,9) aufweisen
a) eine den Wangen (4,5) zugeordnete gemeinsame Matrize (16), die als ein präzisionsgeführter Schieber (17) im Raum (R) zwischen den Wangen (4,5) positionsgenau einfahr- und rücklaufbar ausgebildet ist,
b) je eine Pressplatte (11,12) mit Ringzacke (13) zum Festspannen der Wangen (4,5) an der Matrize (16) und
c) je einen zum Ausschneiden der Bohrung vorgesehenen Feinschneidstempel (14,15), von denen einer der oberen oder unteren Wange (4,5) zugeordnet ist und die Feinschneidstempel (14,15) auf einer gemeinsamen Achse (A) angeordnet sind, wobei die Feinschneidstempel (14,15) eine exakt die Achse der Planetenräder Festspannen der Wangen (4,5) an der Matrize (16) und c) je einen zum Ausschneiden der Bohrung vorgesehenen Feinschneidstempel (14,15), von denen einer der oberen oder unteren Wange (4,5) zugeordnet ist und die Feinschneidstempel (14,15) auf einer gemeinsamen Achse (A) angeordnet sind, wobei die Feinschneidstempel (14,15) eine exakt die Achse der Planetenräder abbildende, gegeneinander ausgerichtete Schnittrichtung aufweisen,
und dass die Werkzeugteile in einer zweiten Bearbeitungsstufe umfassen:
d) in den Raum (R) zwischen den Wangen (4,5) ein- und rückführbare, in Bezug auf die Schnittrichtung im Block ver-und entriegelbare ausgebildete, innere Prägestempel (21,22), denen äußere Prägestempel (23,24) für jede Wange (4,5) zugeordnet sind, deren Achsen (D) auf die Schnittrichtung der Feinschneidstempel (14,15) ausgerichtet sind und die im Block gegen die Bohrkanten (25) der Bohrung (6,7) zum Gratverprägen anlaufen.

9. Vorrichtung nach Anspruch 8, **dadurch gekennzeichnet, dass** die Matrize (16) horizontal verfahrbar ausgebildet ist.

10. Vorrichtung nach Anspruch 8 und 9, **dadurch gekennzeichnet, dass** die beim Schneiden anfallenden Abfallbutzen (18,19) von einer Schachtöffnung (20) in der Matrize (16) aufgenommen sind.

11. Vorrichtung nach Anspruch 8, **dadurch gekennzeichnet, dass** die Prägestempel (21-24) einen definierten Prägeradius (PR) aufweisen.

## Claims

1. Method for the production of aligned to each other holes in a planet wheel carrier unit for accurately according to the position receiving planet wheel axles for gears, in which upper and lower bearers (4, 5) arranged parallel to each other at a distance are assembled to a planet wheel carrier unit (1) by for example riveting, welding, calking, **characterized in that** afterwards the holes (6, 7) for the planet wheels are placed into the bearings (4, 5) of the planet wheel carrier unit (1) on a common aligned axis (C) and that the holes (6, 7) in all bearings (4, 5) are produced by simultaneous accurate according to the position fine blanking in a fine blanking tool in a first stage and after that the fine blanked holes are finished in a second stage in a forming tool by simultaneously coining the inner and outer burrs at all edges of the holes (6, 7) without any rework.

2. Method according to claim 1, **characterized in that** in the first stage and in the second stage are carried out the following processing steps:
a) hydraulic fix clamping of the bearings (4, 5) of the planet wheel carrier unit (1) with a die plate (16) insertable into the space between the bearings (4, 5), lockable in an exact position and respectively one allocated to one of the bearings (4, 5) upper respectively lower pressure pad (11, 12), when the tool is closing;
b) simultaneously cutting the holes (6, 7) out of the bearings (4, 5) by respectively at least two precision shearing punches (14, 15) lying on one axis, working in opposite to each other directions in the first stage in such a way, that both holes (4, 5) are exactly matching aligned on one common axis (C);
c) unlocking and returning the die plate (16) simultaneously pulling out the slugs (18, 19) to free the space between the bearings (4, 5);
d) inserting inner coining dies (21, 22) into the space between the bearings (4, 5) and simultaneously locking the coining dies (21, 22, 23, 24) in a block on the common axis (C) of the holes (4, 5) in the bearings (6, 7) at a defined distance;
e) coining the burrs of all hole edges of the fine blanked holes (6, 7) in the bearings (4, 5) by aligned with the common axis (C) of the holes (6, 7), working in opposite to each other directions, simultaneously and concerted hitting the block of the locked inner coining dies (21, 22) outer coining dies (23, 24) with a defined coining radius, when the tool closes;
f) moving out the slugs (18, 19) occurring during fine blanking when the tool opens perpendicular to the moving direction of the die plate (16) either downwards or upwards and taking out the finished planet wheel carrier unit (1).

3. Method according to claims 1 and 2, **characterized in that** the processing steps a) to f) are realized in a progressive tool within one working stroke.

4. Method according to claims 1 and 2, **characterized in that** the processing steps a) to c) and the processing steps d) to f) are realized in separate tools.

5. Method according to claim 1, **characterized in that** due to the fine blanking of the holes (6, 7) is achieved a work-hardening of the hole surface of up to 50 % in comparison to a machining operation.

6. Method according to claim 1, **characterized in that** due to the burr coining is achieved an increased percentage contact area per guiding blank of up to 13 % compared to a machining burr removal.

7. Method according to claims 1 and 2, **characterized in that** for burr coining are used coining dies (21, 22, 23, 24) with a defined coining radius of up to 0,2 mm.

8. Device for the production of aligned to each other holes in a planet wheel carrier unit for accurately according to the position receiving planet wheel axles for gears, which is assembled for example by riveting, welding, calking of parallel to each other at a distance positioned upper and lower bearings (4, 5) by means of a tool consisting of several tool parts (8, 9), **characterized in that** in a first processing stage the tool parts (8, 9) have:
a) an allocated to the bearings (4, 5) common die plate (16) realized as precision guided slide (17)in the space (R) between the bearings (4, 5), which is with regard to its position precisely insertable and returnable,
b) respectively one pressure pad (11, 12) with V-shaped projection (13) for fixedly clamping the bearings (4, 5) at the die plate (16) and
c) respectively one provided for cutting out the hole precision shearing punch (14, 15), of which one is allocated to the upper or lower bearing (4, 5), wherein the precision shearing punches (14, 15) are positioned on a common axis (A) and wherein the shearing punches (14, 15) have contradirectional shearing directions exactly representing the axle of the planet wheels,
and that in a second processing stage the tool parts comply:
d) inner coining dies (21, 22) insertable and removable into and from the space (R) between the bearings (4, 5), which are with regard to the cutting direction can be locked into a block and unlocked, to which are allocated outer coining dies (23, 24) for each bearing (4, 5), the axes (D) of which are aligned with the cutting direction of the precision shearing punches (14, 15) and acting as a block against the hole edges (25) of the holes (6, 7) to coin the burr.

9. Device according to claim 8, **characterized in that** the die plate (16) is horizontally movable.

10. Device according to claims 8 and 9, **characterized in that** the slugs (18, 19) occurring during the cutting are received in an opening (20) in the die plate (16).

11. Device according to claim 8, **characterized in that** the coining dies (21 - 24) have a defined coining radius (PR).

## Revendications

1. Procédé de fabrication d'alésages alignés les uns par rapport aux autres dans une unité porte-pignons satellites destinée à la réception dans une position précise d'axes de pignons satellites pour une transmission, dans lequel des joues supérieure et inférieure (4, 5) disposées parallèlement l'une à l'autre et à distance l'une de l'autre et reliées, par exemple, par des rivets à écraser, par soudage, par matage, sont jointes pour former une unité porte-pignons satellites (1), **caractérisé en ce que** les alésages (6, 7) pour les pignons satellites sont ensuite ménagés dans les joues (4, 5) de l'unité porte-pignons satellites (1) sur un axe aligné commun (C) et **en ce que** les alésages (6, 7) sont produits dans toutes les joues (4, 5) grâce à une découpe de précision simultanée dans une position précise dans une première étape se déroulant dans un outil de découpe de précision et les alésages obtenus par la découpe de précision font ensuite l'objet d'une finition sans retouche grâce à un ébavurage au poinçon intérieur et extérieur simultané sur chaque bord alésé des alésages (6, 7) dans une seconde étape se déroulant dans un outil de formage.

2. Procédé selon la revendication 1, **caractérisé en ce que** les opérations suivantes se déroulent dans la première étape et dans la seconde étape :
a) fixation par serrage hydraulique des joues (4, 5) de l'unité porte-pignons satellites (1), lors de la fermeture de l'outil, grâce à une matrice (16) pouvant être entrée dans l'espace entre les joues (4, 5) et pouvant être verrouillée dans une position exacte et à une plaque de pressage (11, 12) supérieure resp. inférieure associée à chaque fois à une des joues (4, 5) ;
b) découpe simultanée des alésages (6, 7) dans les joues (4, 5) grâce à chaque fois à au moins deux poinçons de découpe de précision (14, 15) situés sur un axe et fonctionnant en sens contraire l'un par rapport à l'autre, dans la première étape, de manière à ce que les deux alésages (4, 5) soient alignés sur un axe commun (C) avec une précision parfaite l'un par rapport à l'autre,
c) déverrouillage et recul de la matrice (16) avec entraînement des pastilles de découpe (18, 19) pour libérer l'espace entre les joues (4, 5),
d) entrée de poinçons de matriçage intérieurs (21, 22) dans l'espace entre les joues (4, 5) et verrouillage simultané des poinçons de matriçage (21, 22, 23, 24) en bloc sur l'axe commun (C) des alésages (4, 5) des joues (6, 7) selon un écartement défini,
e) ébavurage au poinçon de tous les bords alésés des alésages obtenus par la découpe de précision (6, 7) dans les joues (4, 5), lors de la fermeture de l'outil, grâce à des poinçons de matriçage extérieurs (23, 24) présentant un rayon de matriçage défini qui sont alignés sur l'axe commun (C) des alésages (6, 7), fonctionnent en sens contraire l'un par rapport à l'autre et avancent ensemble et en même temps sur le bloc des poinçons de matriçage intérieurs (21, 22) verrouillés,
f) évacuation des pastilles (18, 19) produites lors de la découpe de précision perpendiculairement à la direction de transport de la matrice (16), soit vers le bas, soit vers le haut, lors de l'ouverture de l'outil, et retrait de l'unité porte-pignons satellites (1) finie.

3. Procédé selon les revendications 1 et 2, **caractérisé en ce que** les opérations a) à f) sont exécutées en une course de travail dans un outil à suivre composé.

4. Procédé selon les revendications 1 et 2, **caractérisé en ce que** les opérations a) à c) et les opérations d) à f) sont exécutées dans des outils séparés.

5. Procédé selon la revendication 1, **caractérisé en ce que** la découpe de précision des alésages (6, 7) permet d'obtenir une consolidation par écrouissage de la surface des alésages atteignant jusqu'à 50% par rapport à un usinage par enlèvement de copeaux.

6. Procédé selon la revendication 1, **caractérisé en ce que** l'ébavurage au poinçon permet d'obtenir une augmentation de la fraction de surface portante qui atteint jusqu'à 13% pour chaque disque de guidage par rapport à un ébavurage par enlèvement de copeaux.

7. Procédé selon les revendications 1 et 2, **caractérisé en ce que** des poinçons de matriçage (21, 22, 23, 24) présentant un rayon de matriçage défini atteignant jusqu'à 0,2 mm sont utilisés pour l'ébavurage au poinçon.

8. Dispositif de fabrication d'alésages alignés les uns par rapport aux autres dans une unité porte-pignons satellites destinée à la réception dans une position précise d'axes de pignons satellites pour une transmission, unité qui est composée de joues supérieure et inférieure (4, 5) disposées parallèlement l'une à l'autre et à distance l'une de l'autre et reliées, par exemple, par des rivets à écraser, par soudage, par matage, comprenant un outil composé de plusieurs parties d'outil (8, 9), **caractérisé en ce que**, dans une première étape d'usinage, les parties d'outil (8, 9) comprennent
a) une matrice commune (16) associée aux joues (4, 5), qui est exécutée de manière à pouvoir, en tant que coulisseau à guidage de précision (17), être avancée et reculée dans une position précise dans l'espace (R) entre les joues (4, 5),
b) chacune une plaque de pressage (11, 12) pourvue d'une dentelure annulaire (13) pour la fixation par serrage des joues (4, 5) sur la matrice (16) et
c) chacune un poinçon de découpe de précision (14, 15) prévu pour la découpe de l'alésage, poinçons dont un est associé à la joue supérieure ou inférieure (4, 5), et les poinçons de découpe de précision (14, 15) sont situés sur un axe commun (A), les poinçons de découpe de précision (14, 15) ayant l'un par rapport à l'autre une direction de coupe alignée qui représente exactement l'axe des pignons satellites,
et **en ce que** les parties d'outil comprennent, dans une seconde étape d'usinage :
d) des poinçons de matriçage intérieurs (21, 22) exécutés de manière à pouvoir effectuer un mouvement d'entrée et de recul dans l'espace (R) entre les joues (4, 5) et à pouvoir être verrouillés et déverrouillés en bloc pour ce qui est de la direction de coupe, poinçons auxquels des poinçons de matriçage extérieurs (23, 24) sont associés pour chaque joue (4, 5), dont les axes (D) sont alignés avec la direction de coupe des poinçons de découpe de précision (14, 15) et qui avancent en bloc en direction des bords alésés (25) de l'alésage (6, 7) pour l'ébavurage au poinçon.

9. Dispositif selon la revendication 8, **caractérisé en ce que** la matrice (16) est exécutée de manière à pouvoir se déplacer horizontalement.

10. Dispositif selon les revendications 8 et 9, **caractérisé en ce que** les pastilles de découpe (18, 19) produites lors de la découpe (18, 19) sont reçues par une ouverture en puits (20) dans la matrice (16).

11. Dispositif selon la revendication 8, **caractérisé en ce que** les poinçons de matriçage (21-24) ont un rayon de matriçage (PR) défini.
